# EUROPEAN PATENT SPECIFICATION

(11) **EP 0 608 814 B1**
(45) Date of publication and mention of the grant of the patent: **01.10.1997**
(21) Application number: 94100996.1
(22) Date of filing: 24.01.1994
(51) Int. Cl.: G07F 7/00, H01R 13/62

(54) **Card ejecting mechanism**
Vorrichtung zum Kartenauswerfen
Dispositif pour l'éjection de cartes à puce

(30) Priority: 26.01.1993 US 8939
(43) Date of publication of application: 03.08.1994
(73) Proprietor: THE WHITAKER CORPORATION, Wilmington, Delaware 19808 (US)
(72) Inventor: Broschard III, John Lawrence, Harrisburg, Pennsylvania 17111 (US); Dellinger, Donald Eugene, Hellam, Pennsylvania 17406 (US)
(74) Representative: Klunker . Schmitt-Nilson . Hirsch

(56) References cited:
- US-A- 4 952 161
- US-A- 5 051 101
- US-A- 5 161 989

## Description

The invention relates to a card ejecting mechanism according to the preamble of claim 1. Such mechanism is used for ejecting a memory card from an electrical connector of a card reader.

A known card ejecting mechanism, disclosed in U.S. Patent 4,952,161, comprises a conductive plate bridging between guide arms spaced apart to receive opposite side edges of a card, the guide arms being connected to an electrical connector, a lever arm pivotally attached to the plate, a push button slidably engaging the lever arm, a housing mounting the button slidably on one of the rails, and a sliding tray engaged and moved by the lever to urge the card outwardly from the rails for grasping to remove the card from the rails.

US-A-5,161,989 discloses a card ejecting mechanism of the type defined in the preamble of claim 1. This prior art mechanism has the housing of the push button integrated into one of the guide arms; i.e. the push button is disposed on one predetermined side of the mechanism.

The object of the present invention is to provide a card ejecting mechanism for ejecting a card from an electrical connector, wherein the ejecting mechanism is adapted to be mounted to one side or the other with respect to a card guiding device.

The invention provides a card ejecting mechanism as defined in claim 1. Preferred embodiments are defined in the dependent claims.

The invention further pertains to a card ejecting mechanism adapted to engage a card and to provide ESD protection, electrostatic discharge protection, and EMI protection, electromagnetic interference protection, for the card. The ESD and EMI protection is supplied by at least one conductive finger that engages the card when the card is inserted along a card guiding device. The first conductive finger is positioned to avoid engagement with moving parts of the ejecting mechanism when the ejecting mechanism is mounted to one side of the guiding device. When the ejecting mechanism is mounted to another side of the guiding device, the first conductive finger is removed to avoid engagement with moving parts of the ejecting mechanism, and a second conductive finger is used for engaging the card. The second conductive finger is removed when the first conductive finger is being used to provide the ESD protection.

According to an advantage of the invention, a card ejecting mechanism is constructed to be mounted to one side or the other of a card receiving mechanism of a card reader. According to another advantage of the invention, conductive fingers of a card ejecting mechanism provides ESD protection for a card, and either one or the other of the fingers is removable to avoid engagement with moving parts of the mechanism that is mounted to one side or the other of a card receiving mechanism.

The invention will now be described by way of example with reference to the accompanying drawings in which;
- FIGURE 1: is a perspective view of an electrical connector and a card guiding device, together with a card eject mechanism;;
- FIGURE 2: is a perspective view of the structure shown in Figure 1 with the component parts separated from one another;
- FIGURE 3: is a view similar to Figure 1, further illustrating an electrical connector with the structure shown in Figure 1;
- FIGURE 4: is a top plan view of the structure shown in Figure 3 illustrating alternative mounting locations for the card eject mechanism, and further illustrating the card in an inserted position;
- FIGURE 5: is a view similar to Figure 4 illustrating an ejected position of the card; and
- FIGURE 6: is a fragmentary plan view in section of a portion of the structure shown in Figure 5.

FIGURES 7 and 8 are section views of mounting structure on a housing and a guide rail.

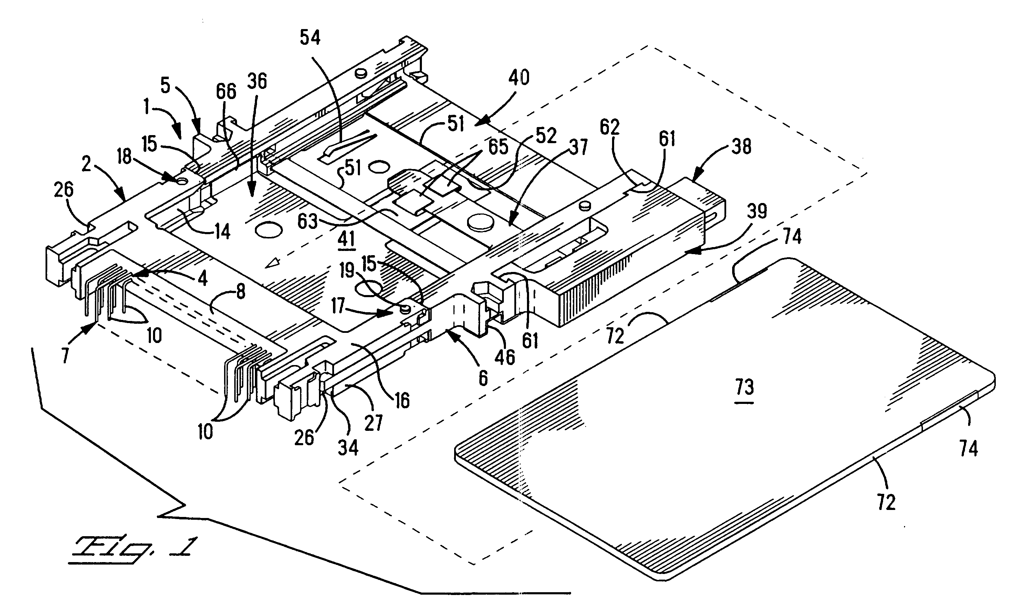

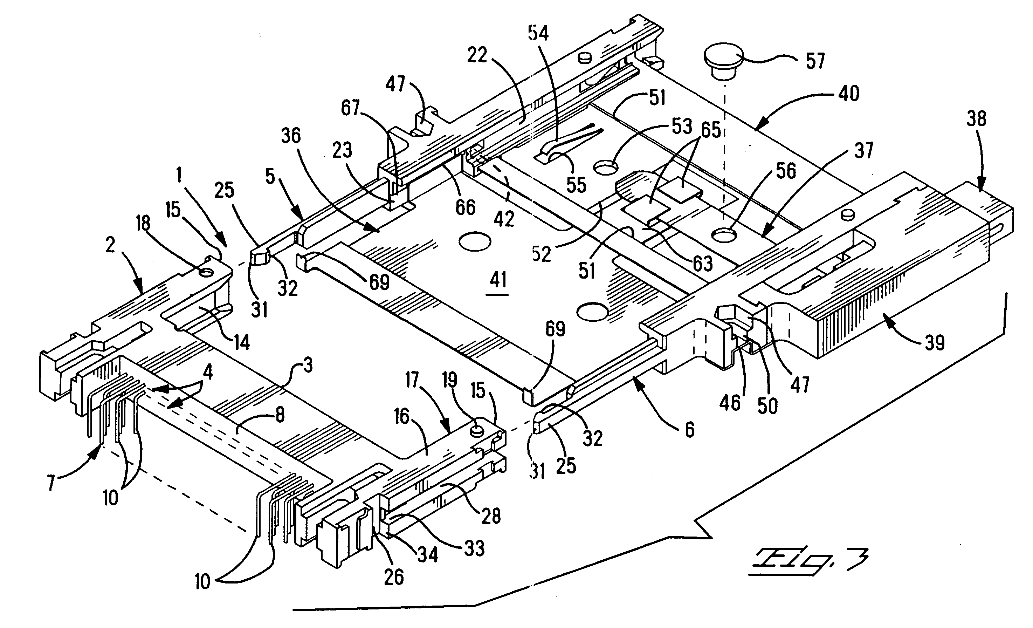

With reference to Figure 1, an electrical connector **1**, especially suitable for use in a card reader, not shown, includes an insulating housing **2** having a card receiving mouth **3** (Figure 3), multiple electrical contacts **4** held by the housing 2 extending in two rows and into the mouth 3, and a set of card guide arms **5, 6**.

With reference to Figure 1, tail sections **7** of the contacts 4 extend outwardly of a rear surface **8** of the housing 2 for connection to a circuit board, not shown. Feet **10** on free ends of the contacts 4 are adapted with respective shapes for connection to the circuit board. For example, the feet 10 are shaped as posts for insertion into plated apertures of the circuit board, not shown. Alternatively, the feet 10 can be shaped as surface mount flat portions, not shown, for connection to surface mount pads, not shown, on a circuit board. The housing 2 has starter grooves **14** in forwardly projecting housing arms **15** on opposite sides of the mouth 3. A top surface **16** of each housing 2 has a locking structure **17** in the form of a recess **18** on one side flanking the mouth 3, and a projecting knob **19** in another side flanking the mouth 3. The card receiving mouth 3 is adapted to receive a card **73**, Figure 1, known in the industry, and disclosed, for example, in U.S. Patent 5,033.972. A conductive ground plane **74** on an exterior of the memory card extends along edges **72** of the card 73, and provides a conductive shield that protects circuitry and electronics in the memory card 73 from electrical influences due to electromagnetic interference, EMI, and electrostatic discharge, ESD.

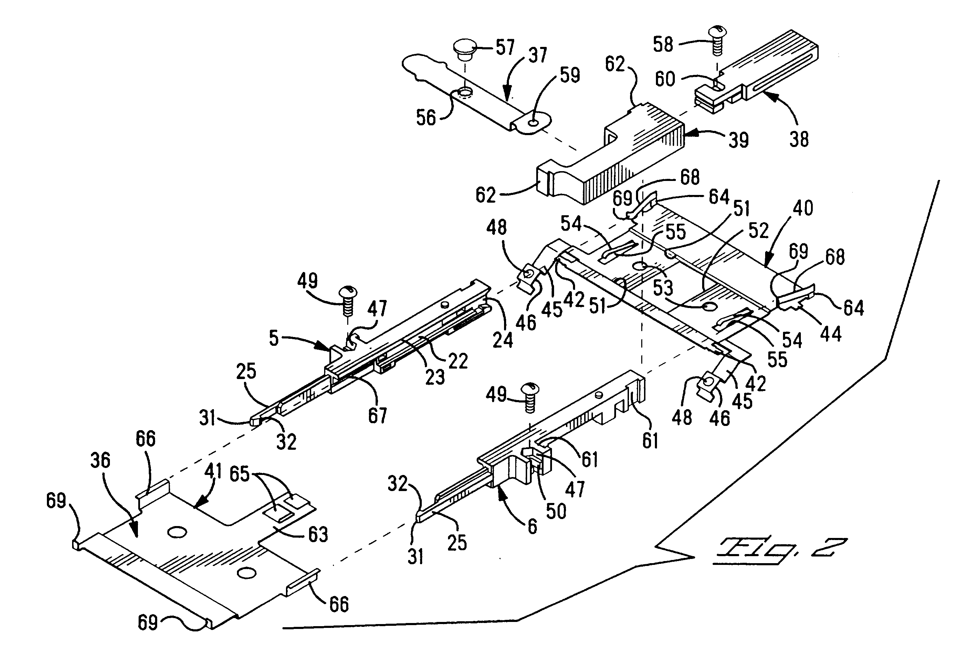

The guide arms 5, 6 are of unitary construction molded from a thermoplastic material. The guide arm 5, 6 are constructed with similar features that will now be described. Figure 2, card receiving grooves **22** on inside surfaces **23** extend along lengths of the respective guide arms 5, 6. Flared, groove mouths **24** at respective ends of the guide arms 5, 6 open into respective grooves 22 of the guide arms 5, 6. At opposite ends of respective guide arms 5, 6, respective elongated prongs **25** extend outwardly.

The prongs 25 lockingly engage in sockets **26**, Figure 3, the sockets 26 being in respective, exterior side surfaces **27** of the housing 2 flanking the mouth 3. The prongs 25 have respective cross sections that interfit slidably along grooves **28** in the respective, exterior side surfaces 27 of the housing 2. Ends of the prongs 25 have respective locking latches **31** with transverse, projecting fingers **32**. The fingers 32 are forced to bend resiliently as they traverse in respective grooves 28, until the fingers 32 emerge from ends **33** of the grooves 28 and unbend to register against transverse latch shoulders **34** at the ends 32 of the grooves 28. Thereby, the prongs 25 lockingly engage the sockets 26.

With reference to Figures 1, 2 and 3, an eject mechanism for ejecting the card 73 comprises; a sliding tray **36** between the guide arms 5, 6 that are spaced apart to receive opposite side edges 72 of the card 73, the guide arms 5, 6 being connected to the electrical connector 1, a lever arm **37** pivotally attached to the tray, a push button **38** engaging the lever arm 37, a housing **39** mounting the button 38 slidably on one of the rails 5, 6, and the tray 36 being engaged and moved by the lever arm 37 to urge the card 73 outwardly to project from the rails 5, 6 for grasping to remove the card 73 from the rails 5,6.

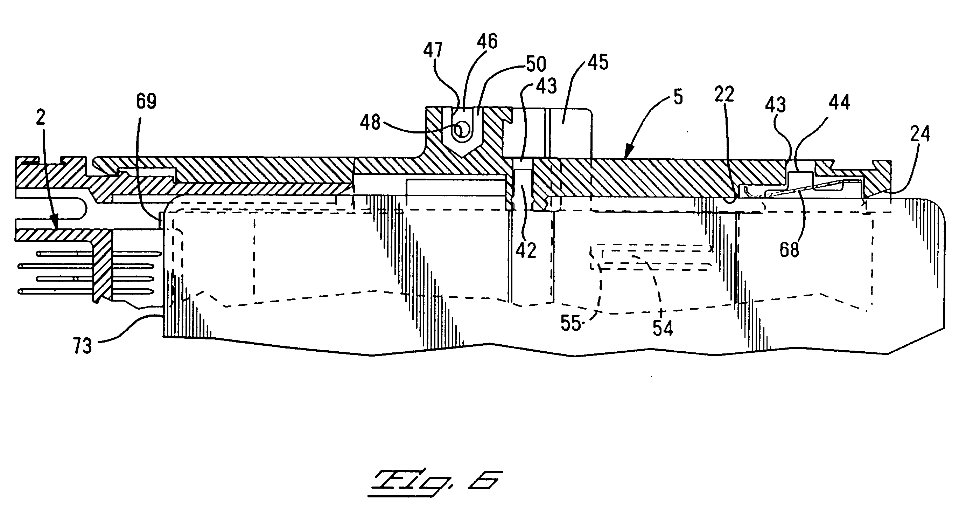

The tray 36 is constructed of a rear plate **40** and a front plate **41**. With reference to Figures 2 and 3, the rear plate 40 is of unitary construction, stamped and formed from a sheet of metal. At a front of the rear plate 40, elongated ground contacts in the form of front support arms **42** extend forwardly, Figure 6. The front support arms 42 extend into the grooves 22 of the guide arms 5, 6, and project beyond the grooves 22, and are inset within recesses **43** in the guide arms 5, 6. At a rear of the plate 40, laterally projecting, rear support arms **44**, Figure 6, extend into and beyond the grooves 22, and register in additional inset recesses 43 in the guide arms 5, 6.

At least one ground contact **45**, Figures 2 and 6, extends forwardly beside the rail 5. The ground contact 45 is bent with an offset portion **46** to nest in a vertical recess **47** in the guide arm 5. An opening **48** in the offset portion 46 receives a fastener **49** that is inserted along the recess 47 in the guide arm 5 and projects through a vertical opening in a flange **50** bridging across the recess 47. The fastener 49 secures the guide arm 5 to a circuit board, not shown. The fastener 49 is conductive and grounds the ground contact 45 to a ground plane, not shown, on the circuit board, not shown. Another ground contact 45 extends forwardly beside the guide arm 6. The ground contact 45 and the guide arm 6 are constructed similarly as is the ground contact 45 and the guide arm 5. The ground contact 45 and the guide arm 6 receive another fastener 49 for the purpose of grounding the ground contact 45 to a ground plane of a circuit board, not shown.

A bracket **64** at the rear of the rear plate 40 near each guide rail 5, 6 is bent to project upwardly from the plate 40. A resilient spring finger **68** on the bracket 64 projects forwardly and is bent to extend diagonally into a groove 22 of the associated guide arm 5 or the associated guide arm 6. The spring finger 68 has a curved end **69** that frictionally engages the ground plane 74 of the memory card 73. The bracket 64 electrically connects the ground plane 74 through each fastener to a ground plane on a circuit board, not shown.

Downward steps **51** are formed by creases in the front and the rear of the plate 40. The steps 51 lead to a central section of the plate 40. A central clearance opening **52** in the central section has an open front through a rise of the front step 51. Pivot openings **53** in the central section flank the clearance opening 52. Cantilever, resilient contact fingers **54** flank the clearance opening 52.

Edges on each contact finger 54 are defined by cutting the thickness of the plate 40 to define an opening **55** encircling the contact finger 54 on three sides. The contact fingers 54 are bent to project diagonally outward and upward from the openings 55 and from the thickness of the plate 40. The contact fingers 54 project into the space between the guide rails 5, 6 to engage the ground plane 74 of the card 73 when the card 73 is inserted into or withdrawn from the guide rails 5, 6.

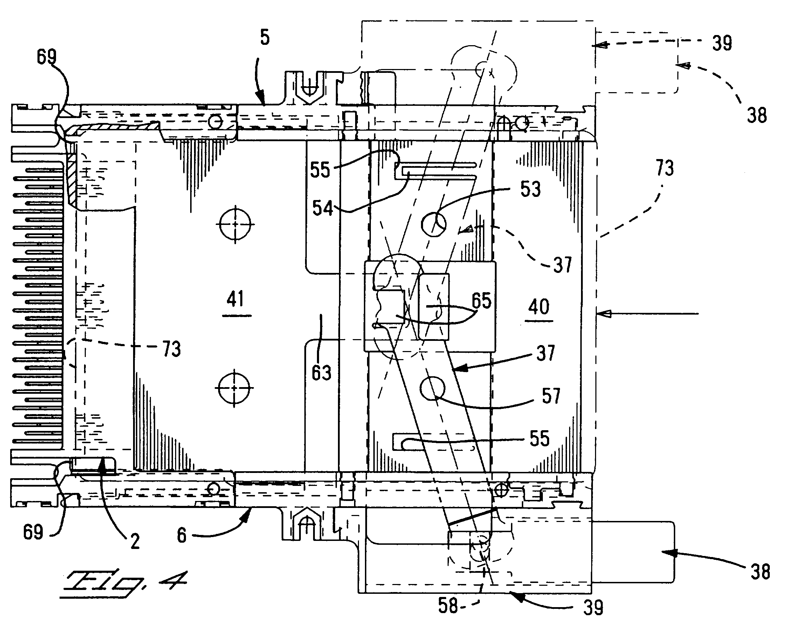

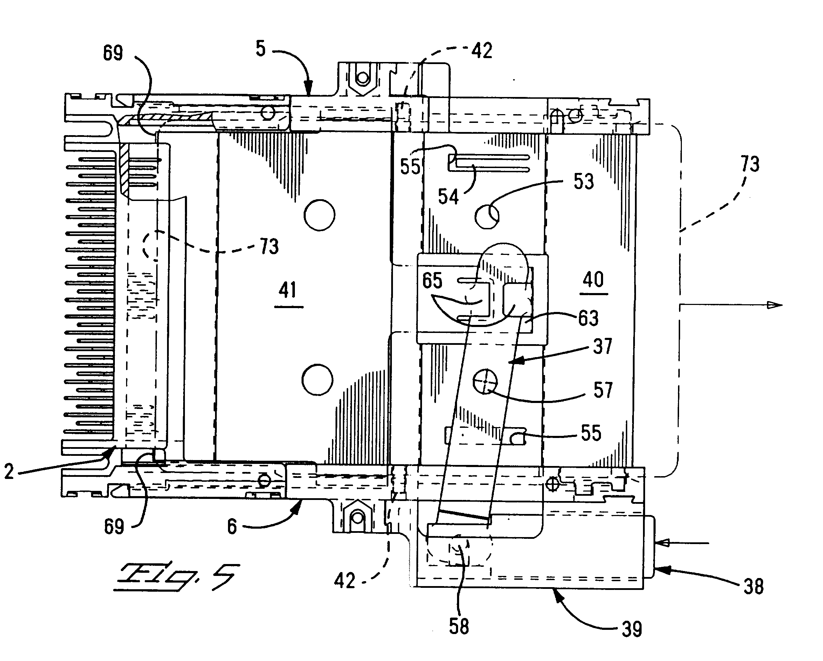

The lever arm 37 is constructed of sheet metal. The lever arm 37 has a pivot, Figure 2, **56** defined by a drawn eyelet with an opening. The eyelet itself is a pivot. The eyelet can receive an optional pivot pin **57** or rivet, for example. One end of the lever arm 37 is pivotally attached to one end of the push button 38. Another pivot pin has an embossed lump that snaps into a recessed portion 60 in one end of the push button 38. The pivot, pin 58 has a rounded end to promote rotation in the recessed portion 60, alternatively; the lever arm 37 is attached by the pivot pin **58**, Figures 4 and 5. The pivot pin 58 extends through an opening **59** in the lever 37 and is mounted in a recessed portion **60** of the push button 38. The push button 38 is slidably mounted in the molded plastic housing 39 of unitary construction.

The housing 39 and the push button 38 are adapted to mount to one side or the other of a card insertion path defined between the guide arms 5, 6. With reference to Figure 4, both guide arms 5, 6 are formed with interlocking structure **61**, interlocking with interlocking structure **62** on the housing 39 for mounting the housing 39 to one of the guide arms 5, 6.

The interlocking structure 61 in Figures 1-6 comprises dovetail grooves. The interlocking structure 62 comprises projecting dovetail tongues. The housing 39 latches to the guide arm 6, or the guide arm 5 as shown in broken lines. The housing 39 can be inverted to face the dovetail tongues 62 toward the dovetail grooves 61 of the guide arm 5. Opposite, inverted surfaces of the housing 39 are identical such that the housing 39 has the same appearance when inverted.

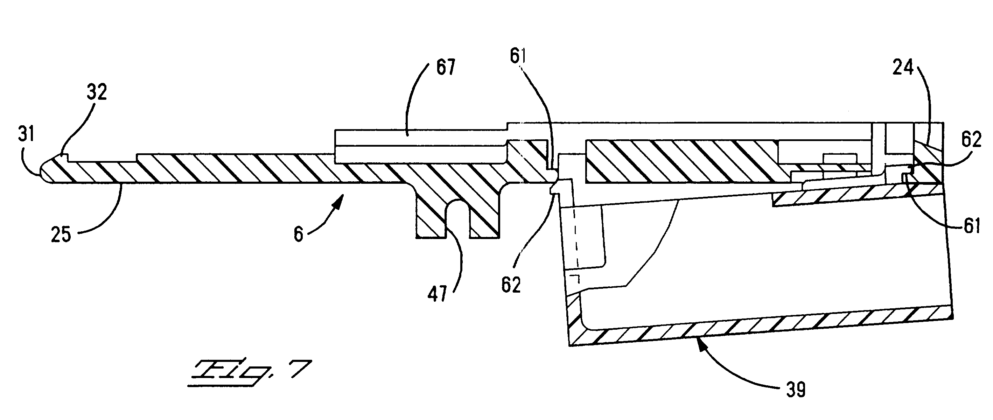

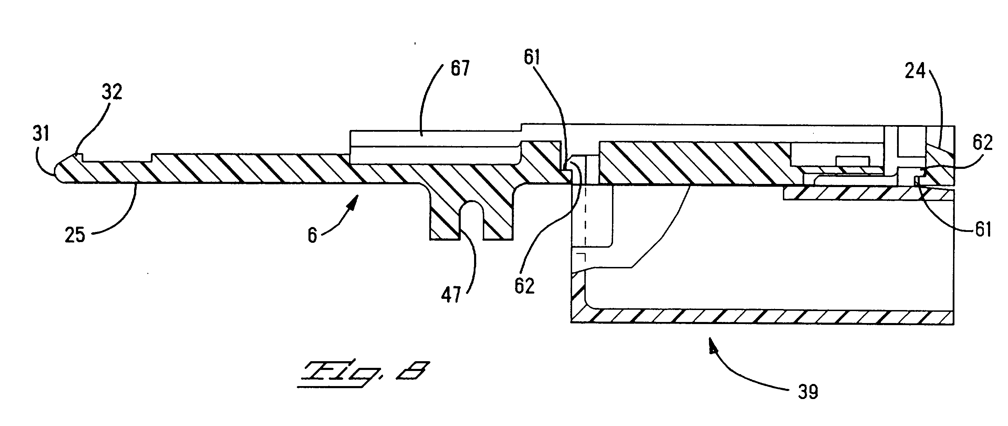

The interlocking structure 61 in Figures 7 and 8 comprises undercut grooves. The interlocking structure 62 in Figures 7 and 8 comprises projecting hooks, facing in opposite directions. The housing 39 latches to the guide arm 6, or the guide arm 5, in a manner as discussed with reference to Figures 7 and 8. A rear hook is hooked onto the rear undercut groove. Then the housing 39 is pivoted while the hook is hooked, Figure 7, until the front hook enters the front undercut groove. The front hook deflects resiliently to enter the undercut groove. Once in the undercut groove, the front hook springs out to hook in the undercut groove, Figure 8. The housing is then restrained from movement. The housing 39 can be inverted to face the hooks 62 toward the undercut grooves 61 of the guide arm 5. Opposite, inverted surfaces of the housing 39 are identical such that the housing 39 has the same appearance when inverted.

The lever arm 37 extends over the rear plate 40 of the tray 36. The finger 54 nearer to the housing 39 is removable to avoid engagement with the lever arm 37. The second conductive finger 54 remains on the tray 36 to contact the card 73 received by the guide rails 5,6 when the first finger 54 has been removed. The lever arm 37 extends over the opening 55 from which the finger 54 has been removed.

As shown in Figures 2, 3 and 4, the front plate 41 of unitary construction is stamped and formed from a sheet of metal. A rearward extending link arm **63** passes under the front step 51 of the rear plate 41 and into the opening 52 in the rear plate 41. A pair of tabs **65** are bent out of the thickness of the link arm 63 and grasp the end of the lever arm 37 that extends over the opening 52.

Support arms **66** on the front plate 41 are formed with folds. The support arms 66 project laterally to register against the inside surfaces 23 of the guide arms 5, 6. The surface 23 is inwardly stepped to recess the arms 66 away from the card receiving grooves 22. The arms 66 are supported slidingly on ledges **67** of the guide arms 5, 6 and slidingly traverse on the ledges 67. Upstanding stops **69** are on a front of the front plate 41. The stops 69 are bent upward from the remainder of the plate 41.

With reference to Figure 5, when the card 73 is inserted along the guide arms 5, 6, the tray receives the card 73. As the card 73 continues to move forward, the card 73 engages the stops 69 and slidingly moves the front plate 41 forward. Movement of the front plate 41 forward causes the lever arm 37 to pivot, and causes the push button 38 to move in a rearward direction to project further outward from the housing 39. The card 73 is fully inserted as shown in Figure 4, and then the front of the card 73 is received in the mouth 3 of the connector 1. To eject the card 73 to a position shown in Figure 5, the push button 38 is pushed further into the housing 39. As the push button 38 moves forwardly, the lever arm 37 pivots clockwise as shown in Figure 5, the front plate 41 moves rearward, and the stops 69 impel the card 73 rearward. The card 73 protrudes from the rear plate 40 and can be removed.

The card 73 is positioned as shown in Figure 5, either for further insertion or for removal. EMI and ESD protection of the card 73 is maintained by engagement of the fingers 68, 54 with the ground plane 74 on the card 73 while the card 73 is positioned as shown in Figure 5.

According to an advantage of the invention, a card ejecting mechanism 35 is constructed to be mounted to one side or the other of a card receiving device of a card reader. According to another advantage of the invention, conductive fingers 54, 68 of a card ejecting mechanism 35 provide EMI and ESD protection for a card 73, and either one or the other of the fingers 54 is removable to avoid engagement with moving parts of the mechanism that is mounted to one side or the other of a card receiving device.

Other embodiments of the invention and modifications of the invention are intended to be covered by the scope of the claims defining the invention.

## Claims

1. A card ejecting mechanism, comprising: a sliding tray (36) between guide arms (5, 6) spaced apart to receive opposite side edges of a card (73), the guide arms being connected to an electrical connector (2), a lever arm (37) pivotally attached to the tray, a push button (38) slidably engaging the lever arm (37); a housing (39) receiving the button (38) slidably on one of the guide arms (5, 6), the tray being engaged and moved by the lever (37) to urge the card outwardly from the guide arms (5, 6) for grasping to remove the card, and a conductive finger (56, 58) on the tray projecting to contact a card received by the guide arms (5, 6),
characterized in that both guide arms (5, 6) being formed with an interlocking structure (61, 62) for mounting the housing (39) on one side or the other of a card insertion path defined by said guide arms (5, 6).

2. A card ejecting mechanism as recited in claim 1, wherein: ground contacts (68) on the tray (36) extend along the guide rails to contact edges of a card received by the guide arms.

3. A card ejecting mechanism as recited in claim 1 or 2, wherein: at least one first ground contact (45) on the tray (36) nests within one of the guide arms, and the first ground contact being adapted with an opening (48) to receive a circuit board fastener (49).

4. A card ejecting mechanism as recited in any of claims 1 to 3, wherein:
the housing is mounted by the interlocking structure (61, 62) to one of the guide arms, the tray (36) is formed with a second conductive finger (54), and one of the fingers (54) nearer to the housing than the other of the fingers is removable to avoid engagement with the lever arm (37).

## Patentansprüche

1. Vorrichtung zum Kartenauswerfen, die aufweist: einen Gleitbehälter (36) zwischen Führungsarmen (5, 6), die einen Abstand aufweisen, um die gegenüberliegenden Seitenränder einer Karte (73) aufzunehmen, wobei die Führungsarme mit einem elektrischen Verbinder (2) verbunden sind, einen Hebelarm (37), der drehbar am Behälter befestigt ist, einen Druckknopf (38), der verschiebbar mit dem Hebelarm (37) in Eingriff kommt; ein Gehäuse (39), das den Knopf (38) verschiebbar auf einem der Führungsarme (5, 6) aufnimmt, wobei der Behälter in Eingriff kommt und mittels des Hebels (37) bewegt wird, um die Karte von den Führungsarmen (5, 6) nach außen zu drücken, damit sie ergriffen wird, um die Karte zu entfernen, und einen leitenden Finger (56, 58) am Behälter, der herausragt, um die von den Führungsarmen (5, 6) aufgenommene Karte zu berühren,
dadurch gekennzeichnet, daß beide Führungsarme (5, 6) mit einer Verriegelungskonstruktion (61, 62) für das Montieren des Gehäuses (39) auf einer Seite oder der anderen eines Karteneinführungsweges, der durch die Führungsarme (5, 6) begrenzt wird, ausgeführt sind.

2. Vorrichtung zum Kartenauswerfen nach Anspruch 1, bei der sich die Bodenkontakte (68) am Behälter (36) längs der Führungsschienen erstrecken, um die Ränder einer durch die Führungsarme aufgenommenen Karte zu berühren.

3. Vorrichtung zum Kartenauswerfen nach Anspruch 1 oder 2, bei der mindestens ein erster Bodenkontakt (45) am Behälter (36) innerhalb eines der Führungsarme eingesetzt ist, und wobei der erste Bodenkontakt mit einer Öffnung (48) versehen ist, um ein Leiterplattenbefestigungselement (49) aufzunehmen.

4. Vorrichtung zum Kartenauswerfen nach einem der Ansprüche 1 bis 3, bei der das Gehäuse mittels der Verriegelungskonstruktion (61, 62) an einem der Führungsarme montiert ist, der Behälter (36) mit einem zweiten leitenden Finger (54) versehen ist, und einer der Finger (54), der näher am Gehäuse ist als der andere Finger, entfernbar ist, um einen Eingriff mit dem Hebelarm (37) zu vermeiden.

## Revendications

1. Mécanisme d'éjection de carte comprenant: un plateau coulissant (36) entre des bras de guidage (5, 6) espacés pour recevoir les bords latéraux opposés d'une carte (73), les bras de guidage étant connectés à un connecteur électrique (2), un bras à levier (37) étant fixé par pivotement au plateau, un bouton-poussoir (38) s'engageant par glissement dans le bras à levier (37); un boîtier (39), recevant le bouton (38) par glissement sur un des bras de guidage (5, 6), le plateau étant engagé par le levier (37) et déplacé par celui-ci pour pousser la carte vers l'extérieur des bras de guidage (5, 6), pour saisir et enlever la carte, et un doigt conducteur (56, 58) sur le plateau débordant pour contacter une carte reçue par les bras de guidage (5, 6),
caractérisé en ce que les deux bras de guidage (5; 6) comportent une structure d'interverrouillage (61, 62) pour monter le boîtier (39) sur un côté ou sur l'autre côté d'une voie d'insertion de la carte définie par lesdits bras de guidage (5, 6).

2. Mécanisme d'éjection d'une carte selon la revendication 1, dans lequel:
des contacts de mise à la terre (68) sur le plateau (36) s'étendent le long de rails de guidage pour contacter les bords d'une carte reçue par les bras de guidage.

3. Mécanisme d'éjection d'une carte selon la revendication 1 ou 2, dans lequel:
au moins un premier contact de mise à la terre (45) sur le plateau (36) est logé dans un des bras de guidage, le premier contact de mise à la terre étant pourvu d'une ouverture (48) pour recevoir un dispositif de fixation d'une plaquette de circuit (49).

4. Mécanisme d'éjection d'une carte selon l'une quelconque des revendications 1 à 3, dans lequel:
le boîtier est monté par la structure d'interverrouillage (61, 62) sur un des bras de guidage, le plateau (36) comportant un deuxième doigt conducteur (54), un des doigts (54), plus proche du boîtier que l'autre des doigts, pouvant être enlevé pour empêcher un engagement par le bras à levier (37).
